# EUROPEAN PATENT APPLICATION

(11) **EP 1 544 276 A1**
(43) Date of publication of application: **22.06.2005**
(21) Application number: 03741542.9
(22) Date of filing: 22.07.2003
(51) Int. Cl.: C09K 15/34, A23L 3/3472

(54) **ANTIOXIDANT AND PROCESS FOR PRODUCING THE SAME**

(30) Priority: 23.07.2002 JP 2002213915
(71) Applicant: Fuji Oil Company, Ltd., Osaka-shi, Osaka 542-0086 (JP)
(72) Inventor: NAKAMURA, A. Fuji Oil Co., Ltd, Tsukuba-gun, Ibaraki 300-2436 (JP); YOSHIDA, Ryuji Fuji Oil Co., Ltd, Tsukuba-gun, Ibaraki 300-2436 (JP); MAEDA, Hirokazu Fuji Oil Co., Ltd, Tsukuba-gun, Ibaraki 300-2436 (JP); FURUTA, Hitoshi Fuji Oil Co., Ltd, Tsukuba-gun, Ibaraki 300-2436 (JP); MATSUMURA, Yasuki Graduate School of Agriculture, Uji-shi, Kyoto 611-0011 (JP); MORI, Tomohiko Graduate School of Agriculture, Uji-shi, Kyoto 611-0011 (JP)
(74) Representative: Hayes, Adrian Chetwynd
(86) International application number: PCT/JP2003/009283
(87) International publication number: WO 2004/009731

(57) **Abstract**

It is intended to provide a method of practically obtaining a natural antioxidant, which gives a sense of security to consumers when added to foods, by efficiently taking out an antioxidant component from soybeans. It is confirmed that a hot water extract obtained by extracting a soybean seeds with hot water at a high temperature exceeding 100°C under weakly acidic conditions has an antioxidant effect. A low-molecular weight fraction of this hot water extract is further fractionated by taking advantage of a difference in solubility in a water-containing organic solvent or using an appropriate filter suitable for the molecular weight size to thereby efficiently give a highly antioxidant fraction.

## Description

### Technical Field

The present invention relates to a soybean-derived natural antioxidant substance useful for preventing oxidation of foods and a process for producing the same, particularly, an antioxidant obtained by separating a low-molecular weight fraction which is a main component of antioxidant capability in a hot water extract from a soybean seed raw material, and a process for producing the same.

### Background Art

As antioxidants used in foods, in particular, as antioxidants for preventing autoxidation of fats and oils, tocopherol and L-ascorbic acid as natural antioxidants, and BHA (butylhydroxyanisole), BHT (dibutylhydroxytoluene), etc. as synthetic antioxidants have hitherto been known. However, in recent years, chemical synthetic products such as BHA and BHT are less frequently used in foods because consumers have anxiety consciousness on chemical synthetic products. On the other hand, since natural L-ascorbic acid is weak to heat and an alkali, and tocopherol is expensive, there are limits on using them.

As naturally derived antioxidant substances, in particular, those derived from plants or plant proteins, known substances include a degradation product of a soybean dreg (JP 6-287554 A (1994)), a specific peptide obtained by degrading a soybean protein with pepsin (JP 9-157292 A (1997)), and use of a protein degradation product derived from soybeans together with a fish testicular component (JP 10-219244 A (1998)), and the like. As proteinaceous antioxidant substances other than plant-derived antioxidant substances, known substances include a peptide derived from lactoferrin which is one kind of milk proteins, and a derivative thereof (JP 6-199687 A (1994), JP 8-176190 A (1996)). However, these are problematic because of expensive raw materials, very low yields, and the like, and, they have not led to a practical level yet.

Further, Tamura et al. report a water-soluble antioxidant substance derived from "okara (insoluble residue from 'tofu' or soybean milk production)" (Bulletin of Japanese Food Science Technology Society, Vol.46, No.5, 303-310 (1990)). This is a report about an antioxidant peptide extracted from defatted "okara" using boiling water and, since an active component is a very low-molecular weight component having molecular weight of 800 to 1,400, the peptide has high hygroscopicity. In addition, since production steps are complicated and a yield is low, the peptide is not practical. Moreover, as an antioxidant derived from "okara", soybean polysaccharide is said to have antioxidant capability (Food Processing Technology, Vol.19, No.4, 173-179 (1999)). However, since these antioxidants derived from "okara" have insufficient antioxidant capability, or expensive, they have not been put into practice yet.

### Disclosure of Invention

An object of the present invention is to provide a method for practically obtaining a natural antioxidant, which gives a sense of security to consumers when added to foods, by efficiently taking out an antioxidant component from soybeans.

The present inventors intensively studied in order to achieve the aforementioned object and, as a result, confirmed that a hot water extract obtained by extracting a soybean seed raw material with hot water at a high temperature exceeding 100°C under weakly acidic conditions has antioxidant property and, further, found that antioxidant capability of an antioxidant substance in this hot water extract varies depending on its molecular weight, more particularly, antioxidant capability is concentrated in a low-molecular weight fraction. Thus, the present invention is completed.

That is, the present invention is a process for producing an antioxidant, which comprises separating a low-molecular weight fraction from a hot water extract obtained by hot water extraction from a soybean seed raw material at a high temperature exceeding 100°C under weakly acidic conditions. Preferably, the molecular weight of the low-molecular weight fraction is 30,000 or smaller.

Further, as a specific example of the separation of the low-molecular weight fraction from the hot water extract in the present invention, the separation is performed by precipitating a high-molecular weight fraction using a water-containing hydrophilic organic solvent, and dissolving the low-molecular weight fraction in the water-containing hydrophilic organic solvent. Preferably, the concentration of the hydrophilic organic solvent is 30% or higher. Furthermore, the present invention provides the production process of the antioxidant, wherein the separation of the low-molecular weight fraction from the hot water extract is performed by membrane separation with an ultrafiltration membrane.

Moreover, the present invention is an antioxidant comprising, as an effective component, an low-molecular weight fraction of a hot water extract which is obtained by extracting a soybean seed raw material with hot water at a high temperature exceeding 100°C under weakly acidic conditions.

### Best Mode for Performing the Invention

In the present invention, any soybean seed raw materials can be used, but it is advantageous to utilize "okara" produced as a by-product in the production of "tofu", soybean milk or a soybean protein isolate. Since storage protein and oil components of soybeans have been removed in advance, "okara" is suitable for processing, and further, effectively utilization of the by-product can be realized.

The soybean raw material is extracted with hot water at a high temperature exceeding 100°C, preferably a high temperature of not lower than 150°C and exceeding 100°C, more preferably a temperature of not exceeding 130°C and not lower than 105°C under weakly acidic conditions, preferably at a range of a pH of 3.0 to 7.0, more preferably at a range of a pH of 3.0 to 5.0. Since a temperature in the extraction exceeds a boiling point of water and vapor pressure is produced, it is suitable to perform extraction using a pressure-resistant reaction vessel. When a temperature for hot water extraction is 100°C or lower, a yield of water-soluble products is extremely low. This is not practical. On the other hand, when extraction is performed at a high temperature exceeding 150°C, a side reaction such as hydrolysis and polymerization is caused. Then, the quality of an extract is deteriorated due to coloring, and antioxidant capability as a whole is reduced.

The antioxidant property in a hot water extract is mainly exhibited by a low-molecular weight fraction having molecular weight of not larger than 30,000. For separating and concentrating this low-molecular weight fraction, a method which can fractionate with molecular weight cutoff of about 30,000 should be selected. For example, suitable methods include utilization of a difference in solubility in a water-containing organic solvent depending on molecular weight, or use of a filter which can separate fractions based on a difference in molecular weight.

In one preferred fractionation method, a high-molecular weight fraction is precipitated with a water-containing hydrophilic organic solvent, and a low-molecular weight fraction is dissolved and separated as a supernatant. In this case, as the hydrophilic organic solvent, alcohols are suitably used. Inter alia, ethanol and isopropanol are suitable. For solubility in these alcohols, a molecular weight range to be dissolved varies depending on alcohol concentration. In order to efficiently separate the low-molecular weight fraction of the present invention, alcohol concentration is suitably 30% or higher, preferably 30 to 80%. When concentration is high, there is a possibility that the active component is also precipitated. When concentration is low, a high-molecular weight substance is not sufficiently precipitated, and separation from a low-molecular weight substance is insufficient. Incidentally, a high-molecular weight fraction, which is a precipitated fraction, is obtained as water-soluble soybean polysaccharide or water-soluble soybean hemicellulose, wherein components having advantageous function such as emulsification and dispersion stabilization of a protein are purified.

The antioxidant substance dissolved in the hydrophilic organic solvent can be isolated as a powder by freeze drying or spray-drying a solution. If necessary, before drying, the hydrophilic organic solvent is removed by distillation under reduced pressure. Then, desalting is performed by electrodialysis or ion-exchange resin treatment, and concentration, freeze dry or spray-drying can be performed. A kind of an acid or an alkali to be added at extraction is not particularly limited, and hydrochloric acid, sulfuric acid, an organic acid such as citric acid, lactic acid, etc. and a salt thereof, as well as sodium hydroxide, potassium hydroxide, etc. can be used.

Other methods for separating a substance exhibiting antioxidant property from a hot water extract include filtration with an ultrafiltration membrane, or a ceramic filter as one kind of an ultrafiltration membrane, having cutoff of about 30,000. As the ultrafiltration membrane, a ceramic filter (pore size: 500 A diameter) manufactured by Toshiba Ceramics can be exemplified. The antioxidant substance having a similar function can also be obtained by concentrating a solution permeated through a membrane under reduced pressure, followed by drying.

The antioxidant substance separated as described above basically composed of saccharide and protein components. Regarding the saccharide component, the saccharide content is about 25 to 60% by weight, and representative constituent sugars contained are galactose, arabinose, rhamnose, fucose, xylose, glucose and galacturonic acid. Herein, the total sugar content was measured by a phenol-sulfuric acid method, uronic acids were measured by a Blumenkrantz method, and neutral sugars were measured by converting neutral sugars into alditol acetate forms and analyzing them by a GLC method.

The antioxidant of the present invention contains 15 to 35% by weight of the protein component as a crude protein. And, the amount thereof can be measured by a known analyzing method such as a mercaptoethanol-containing SDS polyacrylamide gel electrophoresis method (hereinafter, SDS- PAGE). The molecular weight of each amino acid polymer can be assessed from a mobility of a standard molecular weight marker, and determination with a densitometer can also be available. The amino acid polymers effective in the antioxidant of the present invention are distributed in a wide range of molecular weight of about 200 to 30,000.

The presence of sugars at the same mass as that of the amino acid polymers can be confirmed by staining the saccharide component according to a Path staining method after SDS-PAGE. Thus, the antioxidant of the present invention comprises as main components polypeptide and saccharide components. It is unclear what interaction is exerted in the system in which the protein and saccharide components are present.

Herein, the assessment of molecular weight of a component which was effective in the antioxidant of the present invention was performed by a gel filtration method under the following conditions. Conditions) Elution was performed at a flow rate of 1.0 mm/min using Column: G3000PWXL (7.6 mm x 30 cm) manufactured by Tosoh Corporation, Eluent: 25 mM phosphate buffer (pH 7.0) containing 1% SDS and 0.2 M NaCl. Detection was performed by measuring absorbance at 220 nm. A sample to be analyzed was dissolved in the eluent at concentration of 0.5% (containing 0.1% mercaptoethanol), and boiled for 2 minutes to completely dissolve the sample, which was subjected to the analysis. The assessment of molecular weight was performed on the basis of elution time of standard proteins having known molecular weight. In the component effective in the antioxidant of the present invention, the substance having weight of 2,000 to 30,000 occupies 70% or more of the total peak area.

The antioxidant capability of the present invention was measured by the following method. Namely, the antioxidant capability was investigated by measuring oxidation of a fat according to a TBA method wherein TBA was reacted with malondialdehyde (MDA), which was formed by degradation of peroxide lipid, under acidic conditions and the resultant red colored substance was determined (Buege and Aust, Method in Enzymology, 52,302-310 (1978)). First, an emulsifying agent (0.5% β-casein or 2% Tween 20) was dissolved in a 10 mM phosphate buffer (pH 7.0) in advance, the emulsifying agent and an oil (methyl linoleate) were mixed at a ratio of 19 : 1, and the mixture was pre-emulsified (22,000 rpm, 3 min) with a homogenizer (manufactured by Nition Rikakiki Seisakusyo), and fully emulsified by ultrasonication (for 2 minutes) to obtain an emulsion. A substance having antioxidant capability was dissolved in 3 ml of the emulsion, 0.5 µM of an azo compound or 0.5 µM iron sulfate was added, the mixture was vigorously stirred with a touch mixer, and an oxidation reaction was initiated in a constant temperature bath controlled to be 37°C. After 24 hours and 48 hours, each 0.5 ml portion was taken out from the constant temperature bath. For measuring an amount of MDA, 0.5 ml of a phosphate buffer, and 2 ml of a TBA reagent (a mixture of 15 g of trichloroacetic acid + 0.375 g of TBA + 25 ml of 1 N HCl (in 100 ml of water) and 60 mg of 2,6-di-t-butyl-p-cresol (in 3 ml of ethanol)) were added to 0.5 ml of the emulsion, the mixture was boiled at 95°C or higher for 15 minutes, and then rapidly cooled in ice-water, and then the supernatant was measured at 532 nm.

The antioxidant of the present invention may be in any form such as an aqueous solution, a paste or a powder as far as it contains the aforementioned antioxidant substance. When the antioxidant of the present invention is used for anti-oxidation of fats and oils, desirably, the antioxidant substance is used in a ratio of 0.005 to 20% by weight, preferably 0.01 to 5% by weight based on the fats and oils in terms of the amount of the dry antioxidant substance. When the ratio is less than 0.005% by weight, only a little antioxidant effect is obtained and, even when the antioxidant substance is blended at an amount exceeding 20% by weight, the antioxidant effect corresponding to the added amount is not expected. This is not economical. Alternatively, it is also possible to add preliminarily the antioxidant of the present invention as an O/W emulsion or a W/O emulsion with fats and oils and an emulsifying agent. Optionally, other substances such as protein, saccharide, fats and oils, or other natural antioxidant substances may be used together in the antioxidant of the present invention. Examples of the protein include plant-derived protein such as soybean protein, wheat protein, corn protein and rice protein, animal-derived protein such as milk protein, egg protein, fish protein, and livestock meat protein, and peptides thereof. Examples of the saccharide include known saccharide such as monosaccharide, disaccharide and oligosaccharide, sugar alcohol, polysaccharide such as pectin, hemicellulose, and cellulose, starch, gum, and partial degradation products thereof. Examples of the fats and oils include known fats and oils such as plant-derived fats and oils, for example, soybean oil, cottonseed oil, sesame oil, olive oil, palm oil, rapeseed oil, and sunflower oil, and animal-derived fats and oils, for example, milk fat, beef tallow, lard, and a fish oil. Any emulsifying agents can be used, and examples thereof include casein, lecithin, lysolecithin, sucrose fatty acid ester, and glycerin fatty acid ester. Examples of other natural antioxidant substance include tocopherol, L-ascorbic acid and derivatives thereof, β-carotene, sesame seed-derived sesamolinol and sesaminol, epigarocatechin gallate contained in tea catechin and polyphenols such as isoflavone, and saponin. Other components other than these antioxidant substances can be used alone or two or more thereof. Since the antioxidant of the present invention can give antioxidant capability to fats and oils as described above, it can be used in the field of foods, cosmetics and medicaments.

### Examples

The following Examples further illustrate the present invention in more detail, but the present invention is not limited by these Examples. All the percents in Examples are by weight.

### [Preparation of antioxidant substance from "okara" 1]

### Example 1 (antioxidant substance A)

To 100 parts of "okara" (water 80%) obtained in a step of soybean protein isolate production was added a 2-fold amount of water (200 parts), a pH was adjusted to 4.5 with hydrochloric acid, and the mixture was heating-extracted at 120°C for 1.5 hours. After cooling, the mixture was centrifuged (10,000 G × 30 min) to separate it into a supernatant and a precipitated fraction. The thus separated precipitated fraction was further washed with equivalent weight of water, centrifuged, and the supernatant was combined with the above supernatant, and subjected to ultrafiltration using a ceramic filter (pore size: 500A diameter) manufactured by Toshiba Ceramics, and the filtrate obtained was concentrated to 10-fold concentration under reduced pressure, and lyophilized to obtain an antioxidant substance A. The yield relative to dry weight of the raw material "okara" was 5.6%. When the molecular weight was confirmed using a HPLC column (G3000PWXL (7.6 mm × 30 cm)) manufactured by Tosoh Corporation, the molecular weight distribution of the antioxidant substance A was in the range of 2,000 to 28,000. When the dry product was allowed to stand in a room, no deliquescence was observed.

### Example 2 (Antioxidant substance B)

During the preparation of the antioxidant substance A, 99% isopropanol was added to the supernatant after solid-liquid separation so that the final isopropanol concentration was 70%. The resulting precipitate was removed by centrifugation (10,000 G × 30 min), the isopropanol was removed under reduced pressure, and the residue was lyophilized to obtain an antioxidant substance B. The yield relative to dry weight of the raw material "okara" was 6.3%. The molecular weight was confirmed using a HPLC column (G3000PWXL (7.6 mm × 30 cm)) manufactured by Tosoh Corporation, and the molecular weight of the antioxidant substance B was in the range of 30,000 or smaller.

### Example 3 (Antioxidant substance C)

According to the same manner as that for preparation of the antioxidant substance B, an antioxidant substance C was obtained except that the final isopropanol concentration was 60%. The yield relative to dry weight of the raw material "okara" was 6.5%. The molecular weight was confirmed by HPLC to be in the range of 28,000 or smaller.

### Example 4 (Antioxidant substance D)

According to the same manner as that for preparation of the antioxidant substance B, an antioxidant substance D was obtained except that the final isopropanol concentration was 50%. The yield relative to dry weight of the raw material "okara" was 6.2%. The molecular weight was confirmed by HPLC to be in the range of 26,000 or smaller.

### Example 5 (Antioxidant substance E)

According to the same manner as that for preparation of the antioxidant substance B, an antioxidant substance E was obtained except that the final isopropanol concentration was 40%. The yield relative to dry weight of the raw material "okara" was 5.8%. The molecular weight distribution was confirmed by HPLC to be in the range of 2,600 to 25,000.

### Example 6 (Antioxidant substance F)

According to the same manner as that for preparation of the antioxidant substance B, an antioxidant substance F was obtained except that the final isopropanol concentration was 35%. The yield relative to dry weight of the raw material "okara" was 5.1%. The molecular weight distribution was confirmed by HPLC to be in the range of 2,000 to 22,000.

### Comparative Example 1 (Antioxidant substance G)

According to the same manner as that for preparation of the antioxidant substance B, an antioxidant substance G was obtained except that the final isopropanol concentration was 20%. The yield relative to dry weight of the raw material "okara" was 29.1%. When the molecular weight distribution was confirmed by HPLC, even molecular weight in the range of about 1,200,000 was found.

### Comparative Example 2 (Antioxidant substance H)

During the preparation of the antioxidant substance A, lyophilization was performed without filtration with the ceramic filter to obtain an antioxidant substance H. The yield relative to dry weight of the raw material "okara" was 41.5%. When the molecular weight distribution was confirmed by HPLC, even molecular weight in the range of about 2,000,000 was found.

Regarding the antioxidant substances prepared by the foregoing methods, anti-oxidation to methyl linoleate was determined by measuring the amount of MDA using a TBA method after storage for 24 hours and 48 hours. The amount of the antioxidant substance added was 1.0% in a system. As the numerical value is smaller, the amount of an oxidized lipid is smaller, and the antioxidant can be assessed to have stronger antioxidant power.

**(Table 1)**

| Change in the amount of MDA during storage | | | | | | | |
|---|---|---|---|---|---|---|---|
| Storage hour (h) | Example | | | | Comparative Example | | No addition |
| | 1 | 2 | 3 | 6 | 1 | 2 | |
| 0 | 1.6 | 1.2 | 1.0 | 1.6 | 1.6 | 1.8 | 1.2 |
| 24 | 1.8 | 1.4 | 1.0 | 2.0 | 17 | 19 | 27 |
| 48 | 2.2 | 1.5 | 1.1 | 4.5 | 29 | 28 | 34 |
| Yield (%) | 5.6 | 6.3 | 6.5 | 5.1 | 29.1 | 41.5 | - |

While some anti-oxidation capability was recognized in every hot water extract extracted from "okara", isopropanol concentration of 30% by weight or higher is required for separating a fraction having antioxidant function with high purity. When the concentration is less than this range, a fraction having sufficient antioxidant capability with high purity cannot be obtained, while the yield is improved due to contamination of a polysaccharide component. The antioxidant substance prepared by filtration with the ceramic filter has the same function as that of the antioxidant prepared by 60% isopropanol precipitation.

### [Preparation of antioxidant substance from "okara" 2]

According to the same manner as that in Example 3 and that in Example 5, antioxidant substances were obtained except that the hydrophilic organic solvent used was changed from isopropanol to ethanol. Almost the same results as those obtained by using isopropanol were obtained. The yields of substances having antioxidant capability were 5.3% and 6.6%, respectively, and the molecular weight distribution was in the range of 30,000 or smaller in both cases.

### [Preparation of antioxidant substance from "okara" 3]

In view of the results of Example 3, isopropanol concentration for the preparation of an antioxidant substance from a hot water extract was set to be 60%, and the preparation of an antioxidant was studied by using "okara" as a raw material and changing a temperature of hot water extraction.

### Example 7 (Antioxidant substance I)

According to the same manner as that for the preparation of the antioxidant substance C, an antioxidant substance I was obtained except that the temperature for obtaining the hot water extract was 110°C. The yield of the antioxidant substance relative to dry weight of the raw material "okara" was 5.2%. The molecular weight was confirmed by HPLC to be in the range of 30,000 or smaller.

### Example 8 (Antioxidant substance J)

According to the same manner as that for the preparation of the antioxidant substance C, an antioxidant substance J was obtained except that the temperature for obtaining the hot water extract was 130°C. The yield of the antioxidant substance relative to dry weight of the raw material "okara" was 6.6%.

### Example 9 (Antioxidant substance K)

According to the same manner as that for the preparation of the antioxidant substance C, an antioxidant substance K was obtained except that the temperature for obtaining the hot water extract was 140°C. The yield of the antioxidant substance relative to dry weight of the raw material "okara" was 7.1%.

### Example 10 (Antioxidant substance L)

According to the same manner as that for the preparation of the antioxidant substance C, an antioxidant substance L was obtained except that the temperature for obtaining the hot water extract was 150°C. The yield of the antioxidant substance relative to dry weight of the raw material "okara" was 7.5%.

### Comparative Example 3 (Antioxidant substance M)

According to the same manner as that for the preparation of the antioxidant substance C, an antioxidant substance M was obtained except that the temperature for obtaining the hot water extract was 98°C. The yield of the antioxidant substance relative to dry weight of the raw material "okara" was 1.1%. The molecular weight was confirmed by HPLC to be in the range of 32,000 or smaller.

Regarding the antioxidant substances prepared by the foregoing methods, anti-oxidation to methyl linoleate was determined by measuring the amount of MDA using a TBA method after storage for 24 hours and 48 hours. The amount of the antioxidant substance added was 1.0% in a system. Further, the color tone of the antioxidant prepared was also assessed. As the numerical value is smaller, the amount of an oxidized lipid is smaller, and the antioxidant can be assessed to have stronger antioxidant power.

**(Table 2)**

| Change in the amount of MDA during storage | | | | | | |
|---|---|---|---|---|---|---|
| Storage time (h) | Example 7 | Example 8 | Example 9 | Example 10 | Comparative Example 3 | No addition |
| 0 | 1.2 | 1.1 | 1.2 | 1.1 | 1.7 | 0.3 |
| 24 | 1.2 | 1.2 | 1.2 | 1.4 | 2.9 | 27 |
| 48 | 1.5 | 1.4 | 1.5 | 1.5 | 8.6 | 34 |
| Yield (%) | 5.2 | 6.6 | 7.1 | 7.5 | 1.1 | - |
| Color tone * | ○ | ○ | ○ | Δ | ○ | - |

| | | | | | | |
|---|---|---|---|---|---|---|
| (* ○: Off-white, Δ: Slightly brown, ×: Liver brown, -: No assessment) | | | | | | |

In antioxidant capability, there is a great difference in function depending on a temperature at which the hot water extract is obtained. That is, although slight antioxidant property is observed at a temperature of 100°C or lower, such antioxidant property is thought to be insufficient for an antioxidant. Further, the yield is remarkably reduced. On the other hand, when extraction is performed at a temperature exceeding 100°C, the yield is high, and strong antioxidant property is observed. However, at a temperature of 140°C or higher, browning occurs, and this is considered to be not practical to some extent.

### [Comparison of antioxidant property between soybean protein and peptide]

According to the method as described above in [Preparation of antioxidant substance from "okara" 1], the antioxidant capabilities of the antioxidant substance of Example 3, a commercially available soybean protein isolate "FUJIPRO-E (trade name: manufactured by Fuji Oil Company, Limited)" (Comparative Example 4), and an enzyme-degraded soybean peptide "HINEUT S (trade name; manufactured by Fuji Oil Company, Limited)" (Comparative Example 5) were assessed. As the numerical value is smaller, the amount of an oxidized lipid is smaller, and the antioxidant can be assessed to have stronger antioxidant power.

**(Table 3)**

| Change in the amount of MDA during storage | | | |
|---|---|---|---|
| Storage time (h) | Example 3 | Comparative Example 4 | Comparative Example 5 |
| 0 | 1.0 | 2.1 | 1.3 |
| 24 | 1.0 | 9.9 | 3.5 |
| 48 | 1.1 | 14 | 9.7 |

From the above results, it can be seen that the antioxidant substance of the present invention has better antioxidant ability.

### [Antioxidant Test for soybean oil]

### Example 11

A mixture of 100 g of a 5% by weight aqueous solution of the antioxidant substance C obtained in the above Example, 100 g of purified soybean oil, and 2 g of polyglycerin condensed ricinoleic acid ester (manufactured by Sakamoto Yakuhin Kogyo, trade name; "SY Glyster CRS-75") was stirred and mixed with a homogenizer at 40°C for 3 minutes at 10,000 rpm to prepare a W/O-type emulsion. The emulsion was added to soybean oil in an amount of 2% by weight (antioxidant substance: 500 ppm) based on soybean oil, and a deterioration acceleration test was performed at 110°C.

### Comparative Example 6

According to the same manner as that of Example 11, the deterioration acceleration test was performed except that tocopherol was used in place of the antioxidant substance C. Anti-oxidation power was measured by a CDM test (manufactured by Metrohm-Sibata Ltd., "Lanshimat E679 type"), and the results are shown in Table 4.

**(Table 4)**

| Antioxidant power to soybean oil | | |
|---|---|---|
| Sample | Amount to be added to soybean oil (ppm) | Inducement time (h) |
| Example 11 | 1,000 | 7.2 |
| Comparative Example 6 | 1,000 | 7.4 |
| No addition | 0 | 4.3 |

It is shown that, as the inducement time is longer, the antioxidant power is stronger.

From Table 4, the antioxidant substance of the present invention exhibits better antioxidant power, and has almost the same effective level as compared with the product to which tocopherol is added.

### [Test of antioxidant property using margarine]

### Example 12

The antioxidant substance C obtained in the above Example was added to prepare margarine having the formulation shown in the following table 5 (Example 12).

### Comparative Example 7

According to the same manner as that of Example 12, margarine was prepared except that a skimmed milk powder was added in place of the antioxidant substance C (Comparative Example 7).

**(Table 5)**

| Formulation of margarine (% by weight) | |
|---|---|
| Raw materials | Blending amount |
| Hydrogenated soybean oil (mp 34°C) | 32 |
| Hydrogenated cottonseed oil (mp 34°C) | 17 |
| Soybean salad oil | 21 |
| Antioxidant substance C or skimmed milk powder | 1 |
| Table salt | 1 |
| Monoglyceride | 0.2 |
| Lecithin | 0.2 |
| Sorbitan Fatty acid ester | 0.2 |
| β-carotene | 0.002 |
| Water | 27.398 |

The time until POV reached 100 was measured by an AOM test, and oxidation stability of each resulting margarine was assessed. As a result, the time was 41 hours in Comparative Example 7 using the skimmed milk powder, while the time was 66 hours in Example 12 using the antioxidant substance C. Thus, the margarine in which the antioxidant substance C was blended was excellent in oxidation stability.

### Industrial Applicability

According to the present invention, separation and concentration of an antioxidant substance contained in a hot water extract of a soybean seed raw material can be performed easily, and it becomes possible to provide a novel natural antioxidant which has high stability, and is used in foods, fats and oils, etc. by a practical method.

## Claims

1. A process for producing an antioxidant, which comprises separating a low-molecular weight fraction from a hot water extract obtained by hot water extraction from a soy bean seed raw material at a high temperature exceeding 100°C under weakly acidic conditions.

2. The process according to claim 1, wherein the molecular weight of the low-molecular weight fraction is 30,000 or smaller.

3. The process according to claim 1 or 2, wherein the separation of the low-molecular weight fraction from the hot water extract is performed by precipitating a high-molecular weight fraction using a water-containing hydrophilic organic solvent, and dissolving the low-molecular weight fraction in the water-containing hydrophilic organic solvent.

4. The process according to claim 3, wherein the concentration of the hydrophilic organic solvent in the water-containing hydrophilic organic solvent is 30% or higher.

5. The process according to claim 1 or 2, wherein the separation of the low-molecular weight fraction from the hot water extract is performed by membrane separation with an ultrafiltration membrane.

6. An antioxidant comprising, as an effective component, a fraction of a hot water extract which is obtained by extracting a soybean seed raw material with hot water at a high temperature exceeding 100°C under weakly acidic conditions, and has a molecular weight of 30,000 or smaller.

7. The antioxidant according to claim 6, wherein the fraction having the molecular weight of 30,000 or smaller is a fraction comprising saccharide and protein components.
